# EUROPÄISCHE PATENTSCHRIFT

(11) **EP 1 269 179 B1**
(45) Veröffentlichungstag und Bekanntmachung des Hinweises auf die Patenterteilung: **29.04.2009**
(21) Anmeldenummer: 01919385.3
(22) Anmeldetag: 13.03.2001
(51) Int. Cl.: G01N 30/00

(54) **CHROMATOGRAPHIESÄULE, ENTHALTEND MONOLITHISCHE SORBENZIEN MIT FASERVERSTÄRKTER KUNSTSTOFFUMMANTELUNG UND DEREN VERWENDUNG**
CHROMATOGRAPHY COLUMN COMPRISING MONOLITHIC SORBENTS WITH A FIBER-REINFORCED PLASTIC COATING AND ITS USAGE
COLONNE DE CHROMATOGRAPHIE, COMPRENANT SORBANTS MONOLITHIQUES POURVUS D'UNE ENVELOPPE EN MATIERE PLASTIQUE RENFORCEE PAR FIBRES ET SON UTILISATION

(30) Priorität: 07.04.2000 DE 10016825
(43) Veröffentlichungstag der Anmeldung: 02.01.2003
(73) Patentinhaber: Merck Patent GmbH, 64293 Darmstadt (DE)
(72) Erfinder: CABRERA, Karin, 63303 Dreieich (DE); KRAUS, Alexander, 64347 Griesheim (DE); NEUROTH, Willi, 64380 Rossdorf (DE); LUBDA, Dieter, 64625 Bensheim (DE)
(86) Internationale Anmeldenummer: PCT/EP2001/002775
(87) Internationale Veröffentlichungsnummer: WO 2001/077660

(56) Entgegenhaltungen:
- WO-A-98/59238

## Beschreibung

Die Erfindung betrifft eine chromatograhiesaüle gemäss Anspruch 1 und deren Verwendung gemäss Anspruch 4.

Zur Herstellung konventioneller Chromatographiesäule mit partikulären Sorbenzien wird das Füllmaterial in ein Edelstahl- oder Kunststoffrohr mit passgenauen Enden gefüllt. Dabei wird erreicht, daß das Sorbensbett am Mantel der Säule dicht anliegt und die Partikel homogen über den gesamten Querschnitt der Säule verteilt sind.

Ersetzt man, wie es z.B. in WO 94/19 687 und in WO 95/03 256 offenbart ist, partikuläre durch monolithische Sorbenzien, so ergibt sich das Problem, die Ummantelung des Sorbens flüssigkeitsdicht und druckstabil abzudichten. Anorganische oder organische Formkörper können bei ihrer Herstellung schrumpfen, so daß sie nicht in der ursprünglichen Form verbleiben können. Sie müssen mit einer neuen flüssigkeitsdichten und druckstabilen Ummantelung versehen werden. Nur so ist gewährleistet, daß Probe und Elutionsmittel ausschließlich durch das Sorbens transportiert werden.

Verschiedene Möglichkeiten zur flüssigkeitsdichten Ummantelung von monolithischen Sorbenzien sind in DE 197 26 164 offenbart. Dazu gehört beispielsweise eine Ummantelung mit druckstabilen Kunststoffen wie z.B. PEEK (Polyetheretherketon) oder faser unmanteltem PEEK. Versuche, monolithische Sorbenzien mit derartigen Materialien zu ummanteln, zeigten jedoch, daß nicht alleine die mechanische Stabilität der Ummantelung ausschlaggebend ist.

Die Güte einer monolithischen Säule für die HPLC kann über die Trennleistung (N/m) einerseits und über die Peaksymmetrie andererseits beschrieben werden. Eine gute analytische Säule besitzt Trennleistungen von 70.000 -100.000 N/m. Die Peakform entspricht im Idealfall einer Gauss'schen Glockenform. Abweichungen von dieser symmetrischen Form führen zu einem "fronting" oder zu einem "Tailing". Die inhärente Trennleistung des Säulenkörpers sowie die Peaksymmetrie sollte sich nach Ummantelung mit einem Polymer zum lösungsmitteldichten Abschluss im chromatographischen Anwendungstest nicht mehr ändern.

Bei ungeeigneten Ummantelungen liegt das Polymer nicht totvolumenarm an dem Säulenkörper an. Die Säule zeigt von Beginn an Vorpeaks oder zumindest ein "Peakfronting" infolge schnelleren Probedurchlaufs an der Grenzfläche Säulenkörper/ Polymer.

Ummantelungen mit ungeeigneten Polymeren können auch beim ersten chromatographischen Test noch gute Trennleistung und Peaksymmetrie liefern, aber bei weiterem Gebrauch zu einer Veränderung/ Verschlechterung der beiden Güteparameter führen.

Ein Phänomen ist die Zunahme des Peaktailings beim Lagern der Säule in der mobilen Phase (z.B. Lagerung in Acetonitril / Wasser, 60/40 für 4 Wochen) wegen der mikroporösen Struktur der Ummantelung. Ein weiteres Phänomen kann die Zunahme eines Peakfrontings bei gleichzeitiger Abnahme der Trennleistung wegen einer Geometrieveränderung der Ummantelung sein.

Es wurde gefunden, daß diese ungünstigen Phänomene durch die natürlichen Schrumpfungs- und Schwindungseigenschaften von Polymeren einerseits und durch die Quelleigenschaften in Lösungsmitteln andererseits hervorgerufen werden. Besonders problematisch ist die Ummantelung starrer, spröder anorganischer Formkörper, z.B. aus Kieselgel. Da das Polymer (beispielsweise PEEK) bei hohen Verarbeitungstemperaturen auf den Formkörper aufgeschmolzen wird, haftet es zunächst fest darauf. Beim Abkühlen des Polymers kommt es zu "Bewegungen" (Schrumpfen bzw. Schwinden) des Polymers, während der Formkörper starr in seiner Dimension bleibt. Dabei kommt es zum Aufbau von Spannungen. Kommt das Polymer nun in Berührung mit Lösungsmitteln, adsorbiert es diese und quillt. Hierbei werden die aufgebauten Spannungen in Längs- und Querrichtung abgebaut. Als Folge kommt es zu kleinen Zerstörungen des porösen Kieselgelkörpers an der Grenzfläche. Das Polymer, welches auf dem Kieselgel fest haftet, verursacht durch seine Eigenbewegung das Entstehen von Löchern durch "Mitnahme" von Kieselgel an der Grenzfläche. Hieraus resultiert eine Abnahme der Trennleistung, im extremen Fall ein starkes Peakfronting.

Eine Zunahme von Peaktailing lässt sich durch eine Mikroporenstruktur in der Polymerummantelung erklären, durch die es zu unkontrollierten zusätzlichen Diffusionsvorgängen während des Chromatographieprozesses kommt.

Diese Ergebnisse zeigen, daß eine Ummantelung für monolithische Sorbenzien idealerweise alle der folgenden Eigenschaften erfüllen sollte:
- lösungsmittelstabil gegenüber in der Chromatographie gebräuchlichen Lösungsmitteln, wie z.B. Acetonitril, MeOH, Wasser, Dioxan, Heptan usw., da die mobile Phase aus einem oder mehreren dieser Komponenten besteht.
- mechanisch stabil, um bei höheren Flussraten ohne Probleme schneller chromatographieren zu können. Bei höheren Flussraten baut sich ein Rückdruck innerhalb der Säule auf. Das Polymer sollte auch bei einem Rückdruck von bis zu 200 bar seine Geometrie nicht verändern.
- totvolumenarme Auflage auf dem monolithischen Säulenkörper, um Trennleistungsverlüste und ein Fronting der Substanz-Peaks bzw. Vorpeaks durch unkontrollierte Eluentenströme an der Grenzfläche Polymer-Säulenkörper zu vermeiden.
- porenfrei, um ein nachteiliges Tailing der Substanz-Peaks durch unkontrollierte Diffusionsvorgänge in Mikroporen der Ummantelung zu vermeiden.

Aufgabe der vorliegenden Erfindung war es daher, geeignete Ummantelungen für monolithische Säulen zur Verfügung zu stellen, die die oben genannten Anforderungen erfüllen. Insbesondere sollte die totvolumenarme Auflage auf dem monolithischen Säulenkörper verbessert werden.

Es wurde gefunden, daß insbesondere zur totvolumenarmen Auflage auf einem monolithischen Formkörper die Viskosität der zur Ummantelung verwendeten Polymere von großer Bedeutung ist. Die mechanische Stabilität läßt sich vor allem durch eine Faserverstärkung erreichen. Nur faserverstärkte Polymere in einem bestimmten Viskositätsbereich erfüllen demnach die Anforderungen bezüglich chemischer und mechanischer Stabilität und lassen sich zugleich totvolumenarm auf die Monolithen aufbringen.

Gegenstand der vorliegenden Erfindung ist daher eine Chromatographiesäule enthaltend einen monolithischen Formkörper, der mit einem faserverstärkten thermoplastischen Kunststoff totvolumenarm ummantelt ist, wobei der faserverstärkte Kunststoff Werte zwischen 40 und 100 ml/ 10 min nach der MVI-Methode aufweist.

In einer bevorzugten Ausführungsform der vorliegenden Erfindung wird die Faserverstärkung durch Kohlefasern erzeugt.

In einer bevorzugten Ausführungsform der vorliegenden Erfindung ist das thermoplastische Polymer PEEK (Polyetheretherketon).

Gegenstand der vorliegenden Erfindung ist auch die Verwendung einer erfindungsgemäßen Chromatographiesäule zur chromatographischen Auftrennung mindestens zweier Stoffe.

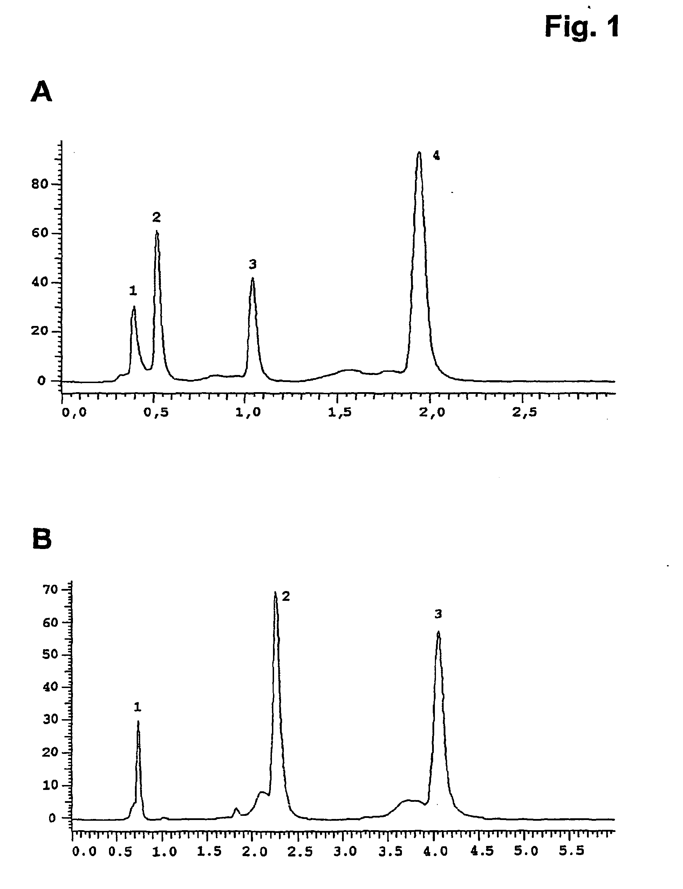

Abbildungen 1 bis 3 zeigen Chromatogramme von Trennungen, die mit verschieden ummantelten Formkörpern durchgeführt wurden. Nähere Angaben finden sich in Beispiel 1 bis 3.

Totvolumenarme Ummantelung bedeutet erfindungsgemäß, daß das Totvolumen zwischen monolithischem Formkörper und der Ummantelung so gering ist, daß es keinen negativen Einfluß auf die Trennleistung der Chromatographiesäule ausübt.

Mit der erfindungsgemäßen Ummantelung können organische und anorganische Formkörper oder auch anorganisch-organische Hybrid-Formkörper ummantelt werden, wie sie z.B. als Sorbenzien für chromatographische Zwecke eingesetzt werden. Für chromatographische Auftrennungen sind die Formkörper zumeist mit Separationseffektoren modifiziert, was aber im Allgemeinen keinen Einfluß auf ihre sonstigen Eigenschaften hat. Besonders geeignet ist die erfindungsgemäße Ummantelung für starre, unflexible Formkörper. Vor allem spröde, anorganische Formkörper, wie sie in WO 94/19 687, WO 95/03 256 oder WO 98/29 350 offenbart sind, lassen sich erfindungsgemäß totvolumenarm ummanteln.

Für die erfindungsgemäße Ummantelung geeignete Kunststoffe sind thermoplastische Polymere, wie z.B. Polyaryle, Polyetherketone, Polyester, aromatische Polyamide, Polyimide, Polybenzimidazole, bevorzugt Fluorpolymere, Polyphenylensulfide, Polyethersulfone oder Flüssigkristalline Polymere (LCP's) sowie Mischungen aus zwei oder mehreren dieser Materialien. Besonders bevorzugt wird PEEK (Polyetheretherketon) eingesetzt. Neben unterschiedlichen Viskositäten zeigen diese Materialien vor allem eine unterschiedliche chemische Stabilität, wie z.B. Lösungsmittelstabilität. Daher hängt die Wahl des für eine Ummantelung geeigneten Kunststoffs auch von der später geforderten chemischen Stabilität ab.

PEEK zeigt für die meisten Anwendungen ausreichende chemische Stabilität. Daher werden die folgenden Ausführungen teilweise auf PEEK als Materialbeispiel bezogen. Ein Fachmann ist jedoch in der Lage, die nachfolgende Offenbarung auf andere Kunststoffe mit anderer Viskosität, chemischer Stabilität etc. zu übertragen.

Es konnte gezeigt werden, daß eine Ummantelung aus reinem Kunststoff die Anforderungen an mechanische und chemische Stabilität nicht erfüllt. Insbesondere zeigen mit reinem Kunststoff ummantelte Formkörper eine nachlassende Trennleistung. Die anfänglich gute Trennleistung aufgrund einer zunächst totvolumenarmen Ummantelung sinkt, da durch Lösungsmittelkontakt das Polymer quillt und ein Ablösen der Ummantelung vom Formkörper erfolgt (s. Beispiel 2). Zudem kommt es beim Abkühlen des Kunststoffs nach dem Aufbringen auf den Formkörper zu Schwindungs- und Schrumpfungsvorgängen. Weiterhin ist die Druckstabilität mancher Kunststoffe nicht ausreichend.

Diese Nachteile können durch den Zusatz von Stabilisatoren, wie Fasermaterialien, anorganischen Materialien oder Pigmenten, z.B. Kreide, Talkum, Glimmer oder anorganische Oxide, wie Siliziumdioxid, beseitigt werden. Erfindungsgemäß werden faserverstärkte Kunststoffe verwendet, die als Stabilisatoren Fasermaterialien, wie z.B. Glas- oder insbesondere Kohlefasern enthalten. Fasern zeigen neben einer Reduktion der natürlichen Quell- Schwindungs- und Schrumpfungseigenschaften des Polymers eine besonders effektive Erhöhung der mechanischen Stabilität.

Je mehr Fasern den Kunststoffen als Stabilisatoren zugesetzt werden, umso spröder werden sie. Daher sind die meisten Kunststoffe nur bis zu einem Anteil von 40% Fasern flexibel genug, um zu Säulen verarbeitet zu werden. Je weniger Fasern zugesetzt werden, desto stärker treten die Quell- bzw. Schrumpf- und Schwindungseigenschaften der Polymere hervor. Da gerade diese Eigenschaften durch den Faserzusatz vermindert werden sollen, sollte der Faseranteil bei mindestens 15% liegen. Bevorzugt wird den Kunststoffen ein Faseranteil von 20-35%, besonders bevorzugt von 27-33% zugesetzt.
Bei der Ummantelung von Formkörpern mit faserverstärkten Kunststoffen wurde auch bei längerer Lagerung in Lösungsmitteln oder bei häufigem Gebrauch keine oder nur geringfügige Abnahme der Trennleistung beobachtet.

Allerdings können nicht alle Stabilisator-verstärkten Kunststoffe zur totvolumenarmen Ummantelung von Formkörpern verwendet werden. Um effektiv auf den Formkörper aufgebracht werden zu können, muß der Formkörper eine bestimmte Viskosität aufweisen.

Die Viskosität von Thermoplasten wird in der kunststoffverarbeitenden Industrie zumeist nach dem Volumenfließindex (MVI) nach DIN ISO 1133 bestimmt. Es wird in einer normierten Apparatur gearbeitet. Deren zentrale Bestandteile sind ein heizbarer, senkrecht stehender Zylinder (Innendurchmesser 9,55 mm) mit Austrittsdüse (Innendurchmesser 2,06 mm, Länge 8,00 mm) und ein passender Kolben mit (von der Apparatur lesbaren) Positionsmarkierungen (30,00 mm), der mit einem Gewicht belastet werden kann. Die Apparatur enthält präzise Meßsysteme zur Bestimmung der zurückgelegten Weglänge des Kolbens sowie zur Zeit- und Temperaturmessung.

Zur Bestimmung der Viskosität der Kunststoffe für eine erfindungsgemäße Säulenummantelung wurde ein an DIN ISO 1133 angelehntes Verfahren verwendet
Zur Durchführung der Bestimmung wird die Apparatur auf eine festgelegte Temperatur von 380°C vorgeheizt. Der vorgetrocknete (150°C,12h) Kunststoff bzw. Kunststoffcompound (6 g Pulver oder Granulat) wird in den Zylinder eingefüllt und verdichtet. Nach Erreichen der Messtemperatur (380°C) werden noch 240 s abgewartet. Anschließend wird das Gewicht (10 kg) automatisch aufgelegt und die Schmelze ausfließen lassen. Die Messungen beginnen, wenn die untere Positionsmarkierung auf dem Kolben erkannt wird, und enden, wenn die obere Markierung erkannt wird. Aus der zurückgelegten Weglänge des Kolbens, den Messzeitintervallen (2 s) sowie der bekannten Kolbenfläche wird nun der Volumenfließindex (MVI) über eine Gerätesoftware bestimmt und in der gebräuchlichen Einheit ml/10 min ausgegeben.

Die Vortrockenzeit und temperatur (150°C, 12h), die Probenmasse (6 g), die Messtemperatur (380°C), das Gewicht (10 kg) und die Messzeitintervalle (2 s) sind Standards, die speziell auf die MVI Bestimmung von PEEK und PEEK-Compounds ausgerichtet wurden. Die Gerätegeometrie und die Wartezeit (240 s) sind in der DIN ISO 1133 festgelegt.

Kunststoffe weisen u.a. in Abhängigkeit ihres Vernetzungsgrades und ihrer Kettenlänge unterschiedliche Viskositäten auf. Durch einen Zusatz von Stabilisatoren, wie z.B. Fasern, wird die Viskosität der Stoffe nochmals verändert. Sie werden deutlich zäher. Diese Aspekte müssen bei der Wahl eines erfindungsgemäß geeigneten Kunststoffes berücksichtigt werden.

Kunststoffe sind im Allgemeinen als Granulat oder Pulver erhältlich. Für die erfindungsgemäße Ummantelung können beide Formen eingesetzt werden. Es muß jedoch beachtet werden, daß sich die Viskosität von Pulvern bei nachfolgenden Verarbeitungsschritten noch verändern kann, während das bei Granulaten zumeist nicht vorkommt. Grund dafür ist, daß Pulver häufig direkt aus dem Polymerisationsansatz stammen und noch einen Restanteil an Monomeren und Oligomeren enthalten. Während der Compoundierung gasen die Monomeren aus und es kann eine Nachpolymerisation erfolgen. Dadurch erhöht sich die Viskosität der Kunststoffe leicht.

Es zeigte sich, daß bei einem Zusatz von 30 % Fasern zur totvolumenarmen Ummantelung nur Kunststoffe mit einer Ausgangsviskosität von über 120 ml/10 min nach MVI-Methode geeignet sind. Bei Werten unter 120 werden die Kunststoffe nach der Copoundierung so zäh, daß sie zwar noch zu Rohren extrudiert werden können, aber nur noch schlecht auf die Formkörper aufgebracht werden können. Die Obergrenze der MVI-Werte der erfindungsgemäß geeigneten Kunststoffe wird im wesentlichen durch die Verfügbarkeit der Kunststoffe bestimmt. Beispielsweise ist PEEK mit mehr als 250 ml/10 min nach MVI-Methode zumeist nicht erhältlich. Allerdings sollten die Kunststoffe beim Aufschmelzen auf den Formkörper nicht zu flüssig werden.

Bevorzugt werden daher pulverförmige Kunststoffe mit einem MVI von 150 bis 210, besonders bevorzugt zwischen 180 und 210 verwendet. Bei Granulaten werden bevorzugt Materialien mit einem MVI von 120 bis 200, besonders bevorzugt von 150 bis 170 eingesetzt.

Zur erfindungsgemäßen Ummantelung der Formkörper werden die Kunststoffe zunächst compoundiert, d.h. sie werden mit Zusatzstoffen, wie z.B. Fasern, Farbkörpem, etc. versetzt. Dies erfolgt bevorzugt durch kontrollierte Zugabe der Zusatzstoffe bei gleichzeitiger Verarbeitung über eine Extruderschnecke. Genauere Prozeßparameter sind dem Fachmann bekannt und finden sich in Handbüchern, wie beispielsweise in Hensen, Knappe und Potente, "Handbuch der Kunststoffextrusionstechnik, Karl Hanse Verlag, (1986/1989).

Beim Compoundieren wird die spätere Viskosität des Kunststoffes durch die Art der zugegebenen Zusatzstoffe und teilweise auch den Zeitpunkt der Zugabe beeinflußt. Bei einer frühen Zugabe von Fasern werden diese während der Compoundierung zerkleinert. Beispielsweise können Fasern mit einer Ausgangslänge von 6 mm nach der Compoundierung nur noch eine durchschnittliche Länge von wenigen µm aufweisen. Für die erfindungsgemäße Ummantelung ist die Länge der zugesetzten Fasern von geringerer Bedeutung, da auch durch die nachfolgenden Verarbeitungsschritte eine Zerkleinerung der Fasern erfolgt. Daher wird der Faserzusatz zumeist früh zugegeben.

Typischerweise beträgt die Viskosität der erfindungsgemäß geeigneten faserverstärkten Kunststoffe nach der Compoundierung mit ca. 30 % Fasern zwischen 40 und 100 ml/10 min nach der MVI Methode, bevorzugt zwischen 50 und 70 ml/10 min nach MVI, wobei die Obergrenze wie schon bei den nicht faserverstärkten Ausgangsmaterialien hauptsächlich durch die Verfügbarkeit bestimmt wird.

Nach der Compoundierung werden aus der Materialmischung nach bekannten Verfahren, wie Extrusion oder Spritzguß Rohre hergestellt. Derartige Formgebungsverfahren sind bekannt und können beispielsweise Lehrbüchern, wie Knappe, Lampl und Heuel, "Kunststoffverarbeitung und Werkzeugbau" Karl Hanse Verlag (1992), entnommen werden.

Anschließend wird der monolithische Formkörper in das Kunststoffrohr eingeführt. Durch Erwärmung wird das Rohr dann in möglichst engen Kontakt mit dem Formkörper gebracht. Dieser Schritt ist ausschlaggebend für eine totvolumenarme Ummantelung. Nur Materialien mit der erfindungsgemäß geeigneten Viskosität lassen sich ausreichend dicht an den Formkörper anfügen. Vorteilhaft ist in diesem Schritt die Verwendung von homogenen Rohren, die über ihre gesamte Länge eine gleichmäßige Wandstärke aufweisen.

Geeignete Verfahren sind dem Fachmann z.B. aus der Herstellung isolierter Kabel bekannt. Eine Möglichkeit, derartig ummantelte monolithische Sorbenzien herzustellen, besteht z.B. darin, den Kunststoff auf den Formkörper aufzuextrudieren. Dabei wird parallel zur Extrusion eines Schlauches durch einen Querkopf der monolithische Formkörper zugeführt. Der frisch extrudierte Schlauch umschließt (heiß) den Formkörper und wird z.B. durch eine Andrückvorrichtung zusätzlich an den Formkörper angedrückt. Dabei ist es auch möglich, einen vorgeformten Schlauch zu erwärmen, statt einen Schlauch durch Extrusion zu erzeugen. Durch dieses mechanische Andrücken und das zusätzliche Sintern beim Abkühlen entsteht eine dichte Ummantelung. Es ist auch möglich, den Formkörper in einen vorgefertigten Schlauch, dessen Innendurchmesser geringfügig größer ist, als der Außendurchmesser des Formkörpers einzubringen und dann den Kunststoff zu erwärmen, so daß der Schlauch auf den Enddurchmesser abgezogen werden kann und dabei den Formkörper dicht umschließt.

Bei einer weiteren Variante wird die Kunststoffummantelung durch Flammspritzen oder ein- oder mehrfaches Aufschrumpfen erzeugt.

Zur Verwendung als Chromatographiesäule können die erfindungsgemäß ummantelten Monolithen dann mit entsprechenden Anschlußstücken, Filtern, Dichtungen etc. versehen werden. Die Ummantelung kann plan mit dem Sorbens abschließen oder an den Enden überstehen. Derartige Konstruktionen sind für Chromatographiesäulen mit partikulären oder monolithischen Sorbenzien bekannt.

Die erfindungsgemäß ummantelten monolithischen Sorbenzien zeigen hervorragende Trenneigenschaften. Auch nach Lagerung in Lösungsmitteln und häufiger Benutzung zeigt sich keine oder nur geringfügige Verschlechterung der Trennleistungen. Somit gewährleistet die erfindungsgemäße Ummantelung erstmals die Herstellung von Chromatographiesäulen, die sowohl mechanisch und chemisch stabil sind, als auch totvolumenarm auf den monolithischen Formkörpern aufliegen.

Auch ohne weitere Ausführungen wird davon ausgegangen, daß ein Fachmann die obige Beschreibung im weitesten Umfang nutzen kann. Die bevorzugten Ausführungsformen und Beispiele sind deswegen lediglich als beschreibende, keineswegs als in irgendeiner Weise limitierende Offenbarung aufzufassen.

### Beispiele

### Chromatographische Trennungen mit unterschiedlich ummantelten Monolithen

Die Trennbeispiele wurden unter folgenden chromatographischen Bedingungen durchgeführt:
Eluent: Acetonitril / Wasser 60/40 (v/v)
Flussrate: 2 mL/min
Temperatur: Raumtemperatur
Inj.-Volumen: 10 µL
Detektion: UV 254 nm

Die in Abbildung 1 A und 2 A und 2 B dargestellten Chromatogramme zeigen die Auftrennung folgender Probe:
1. Thioharnstoff
2. 2,2-Bipyridin
3. Naphthalin
4. Anthracen

Die Abbildungen 1 B, 3 A und 3 B zeigen die Auftrennung von:
1. Thioharnstoff
2. Progesteron
3. Anthracen

Die Nummerierung der Analyten in den Chromatogrammen (Abbildungen 1 bis 3) entspricht der oben aufgeführten Nummerierung.
Auf der Abszisse der Chromatogramme ist jeweils die Retentionszeit in Minuten, auf der Ordinate die Intensität des Detektorsignals in mV angegeben.

### Beispiel 1 Ummantelung mit einem zu viskosen Kunststoff

Abbildung 1 A zeigt das Chromatogramm einer Trennung auf einer Säule, deren Sorbens dem einer Chromolith^{®} SpeedROD RP-18e, 50 - 4,6 mm Säule (hergestellt nach WO 98/29 350) entspricht. Das Chromatogramm von Abbildung 1 B wurde auf einer Säule erstellt, deren Sorbens dem einer Chromolith^{®} Performance RP-18e, 100 - 4,6 mm Säule (hergestellt nach WO 98/29 350) entspricht. Die Viskosität des faserverstärkten PEEK, das zur Ummantelung verwendet wurde, lag bei 29.7 ml/10 min nach MVI-Methode und war somit zu heel. Dadurch liegt die Ummantelung nicht totvolumenarm am Sorbens an. Es kommt zu den typischen Vorpeaks, die in beiden Chromatogrammen deutlich zu erkennen sind.

### Beispiel 2 Ummantelung mit einem nicht faserverstärkten Kunststoff

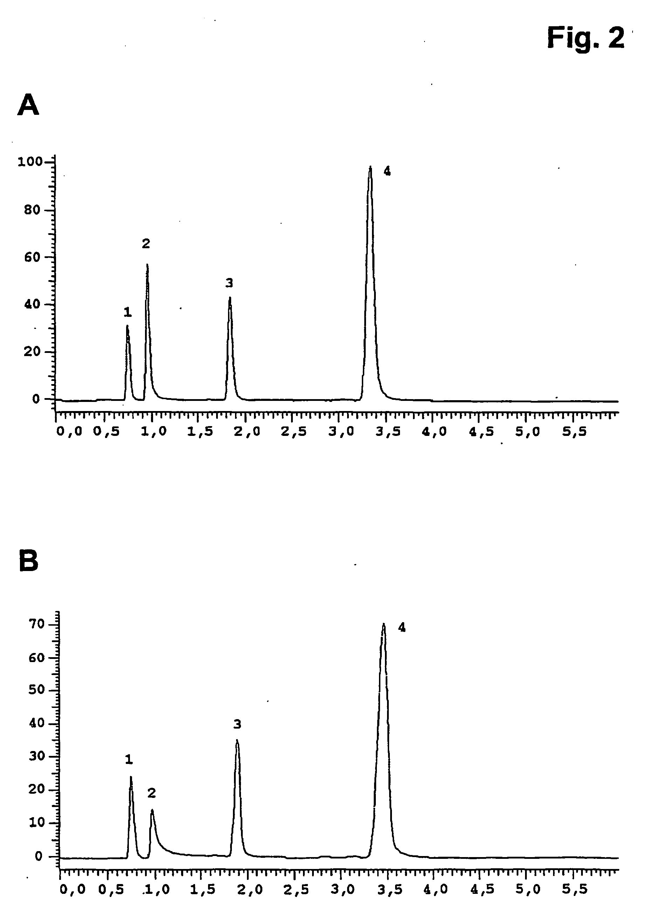

Abbildung 2 A und 2 B wurden auf einer Säule mit einem Sorbens entsprechend Chromolith^{®} Performance RP-18e, 100 - 4,6 mm erstellt. Abbildung 2 A zeigt das erste Chromatogramm, das direkt nach der Ummantelung aufgenommen wurde. Für Peak 4 ergab sich eine Trennleistung von 96.900 N/m und eine Asymmetrie nach USP von 1,23. Abbildung 2 B zeigt eine Trennung, die auf derselben Säule nach 3 Wochen Lagerung (in Acetonitril/ Wasser, 60/40) aufgenommen wurde. Für Peak 4 ergab sich nun eine Trennleistung von 53.000 N/m und eine Asymmetrie nach USP von 0,96.

Dieses Ergebnis läßt sich darauf zurückführen, daß die Ummantelung aus nicht faserverstärktem PEEK besteht. Während der Lagerung entstehen durch Schrumpfungen, Schwindungen oder Quellungen Geometrieverändenrngen, die eine schlechtere Trennleistung bewirken.

### Beispiel 3 erfindungsgemäße Ummantelung

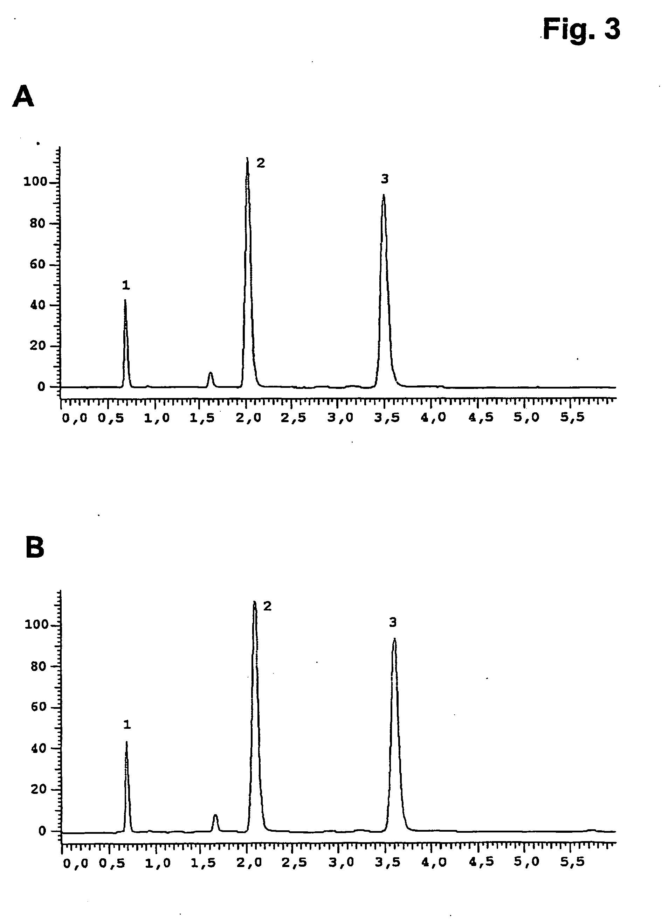

Die in Abbildung 3 A und 3 B dargestellten Chromatogramme wurden auf einer Säule entsprechend Chromolith^{®} Performance RP-18e 100-4,6mm aufgenommen. Das Ummantelungsrohr besteht aus PEEK mit 30% Kohlefaser, MVI = 70 mU 10min.

Abbildung 3 A zeigt den ersten chromatographischen Test direkt nach der Ummantelung. Abbildung 3 B zeigt den Rücktest nach 4 Wochen Lagerung in Acetonitril / Wasser 60/40.
Die Trennleistung der Säule ist bei beiden Trennungen gleich gut. Für Peak Nr. 3 (Anthracen) wurden z.B. folgende Werte ermittelt:
Erster Test: Leistung = 105.000 N/m, Tailing (USP) = 1,19
Rücktest: Leistung = 110.000 N/m, Tailing (USP) = 1,18

## Patentansprüche

1. Chromatographiesäule enthaltend einen monolithischen Formkörper, der mit einem faserverstärkten thermoplastischen Kunststoff totvolumenarm ummantelt ist, **dadurch gekennzeichnet, dass** der faserverstärkte Kunststoff eine Viskosität zwischen 40 und 100 ml/ 10 min nach MVI-Methode aufweist.

2. Chromatographiesäule nach Anspruch 1, **dadurch gekennzeichnet, dass** die Faserverstärkung durch Kohlefasern erzeugt wird.

3. Chromatographiesäule nach einem der Ansprüche 1 oder 2, **dadurch gekennzeichnet, dass** der thermoplastische Kunststoff PEEK (Polyetheretherketon) ist.

4. Verwendung einer Chromatographiesäule nach einem der Ansprüche 1 bis 3 zur chromatographischen Auftrennung mindestens zweier Stoffe.

## Claims

1. Chromatography column containing a monolithic moulding which is encased with a fibre-reinforced thermoplastic leaving little dead space, **characterised in that** the fibre-reinforced plastic has a viscosity between 40 and 100 ml/10 min by the MVI method.

2. Chromatography column according to Claim 1, **characterised in that** the fibre reinforcement is produced by carbon fibres.

3. Chromatography column according to one of Claims 1 or 2, **characterised in that** the thermoplastic is PEEK (polyether ether ketone).

4. Use of a chromatography column according to one of Claims 1 to 3 for the chromatographic separation of at least two substances.

## Revendications

1. Colonne de chromatographie contenant un moulage monolithique qui est enfermé avec un thermoplastique renforcé de fibres laissant un petit espace mort, **caractérisée en ce que** le plastique renforcé de fibres a une viscosité entre 40 et 100 ml/10 min par la méthode MVI.

2. Colonne de chromatographie selon la revendication 1, **caractérisée en ce que** le renforcement de fibres est produit par des fibres de carbone.

3. Colonne de chromatographie selon l'une des revendications 1 ou 2, **caractérisée en ce que** le thermoplastique est PEEK (polyéther éther cétone).

4. Utilisation d'une colonne de chromatographie selon l'une des revendications 1 à 3 pour la séparation chromatographique d'au moins deux substances.
